# FASCICULE DE BREVET EUROPEEN

(11) **EP 3 266 511 B1**
(45) Date de publication et mention de la délivrance du brevet: **03.04.2024**
(21) Numéro de dépôt: 17170428.1
(22) Date de dépôt: 10.05.2017
(51) Int. Cl.: B01D 53/04, B01D 53/047, C01B 13/02

(54) **PROCÉDÉ DE PRODUCTION D'OXYGÈNE DE TYPE VSA AVEC RÉGÉNÉRATION PÉRIODIQUE**
VSA VERFAHREN ZUR HERSTELLUNG VON SAUERSTOFF MIT PERIODISCHER REGENERATION
VSA OXYGEN PRODUCTION METHOD WITH PERIODIC REGENERATION

(30) Priorité: 18.05.2016 FR 1654390
(43) Date de publication de la demande: 10.01.2018
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: PETIT, Pierre Jean Louis, 92290 CHATENEY MALABRY (FR); MONEREAU, Christian, 34000 MONTPELLIER (FR)
(74) Mandataire: Air Liquide

(56) Documents cités:
- EP-A1- 1 095 689
- EP-A1- 1 155 729
- WO-A1-02/47797
- JP-A- S5 527 034
- US-A- 5 463 869

## Description

La présente invention est relative à procédé de production d'oxygène de type VSA (adsorption à variation de vide = vacuum swing adsorption) comprenant une régénération périodique ou exceptionnelle.

La production d'oxygène à partir d'air atmosphérique par des unités de type PSA (procédé d'adsorption à variation de pression = pressure swing adsorption) a connu un important développement au cours de ces dernières décennies. Les améliorations ont porté sur les adsorbants, la technologie et le procédé lui-même.

De façon générale, on désigne par les termes PSA tout procédé d'épuration ou de séparation de gaz mettant en oeuvre une variation cyclique de la pression que voit l'adsorbant entre une pression haute, dite pression d'adsorption, et une pression basse, dite pression de régénération. Ainsi, cette appellation générique de PSA est employée indifféremment pour désigner les procédés cycliques suivants, auxquels il est aussi courant de donner des noms plus spécifiques en fonction des niveaux de pression mis en jeu ou du temps nécessaire à un adsorbeur pour revenir à son point initial (temps de cycle):
- Les procédés VSA dans lesquels l'adsorption s'effectue sensiblement à la pression atmosphérique, préférentiellement entre 0.95 et 1.25 bar abs et la pression de désorption est inférieure à la pression atmosphérique, typiquement de 50 à 400 mbar abs.
- Les procédés MPSA ou VPSA dans lesquels l'adsorption s'effectue à une pression haute supérieure à la pression atmosphérique, typiquement entre 1.35 et 6 bar abs, et la désorption à une pression basse inférieure à la pression atmosphérique, généralement comprise entre 200 et 650 mbar abs.
- Les procédés PSA proprement dits dans lesquels la pression haute est sensiblement supérieure à la pression atmosphérique, typiquement entre 3 et 50 bar abs et la pression basse sensiblement égale ou supérieure à la pression atmosphérique, généralement entre 1 et 9 bar abs.
- Les procédés RPSA (Rapid PSA) pour lesquels la durée du cycle de pression est typiquement inférieure à la minute.
- Les procédés URPSA (Ultra Rapid PSA) pour lesquels la durée du cycle de pression est de l'ordre de quelques secondes maximum.

Avec les définitions précédentes, la présente invention concerne aussi bien les procédés VSA que les procédés VPSA.

Afin de simplifier le texte, nous nous limiterons désormais au terme VSA pour englober le domaine d'application de l'invention tel qu'on vient de le définir. On rappelle qu'il s'agit plus précisément d'unité VSA O2 produisant de l'oxygène (généralement de 85 à 95% molaire et le plus souvent de 90 à 93% mol.).

Quel que soit le type de PSA, un adsorbeur va commencer une période d'adsorption jusqu'à ce qu'il soit chargé dans le ou les constituants à arrêter à la pression haute puis va être régénéré par dépressurisation et extraction des composés adsorbés avant d'être remis en état, en pratique repressuriser, pour recommencer une nouvelle période d'adsorption. L'adsorbeur a alors effectué un "cycle de pression" et le principe même du procédé PSA est d'enchaîner ces cycles les uns après les autres ; il s'agit donc d'un procédé cyclique. Le temps que met un adsorbeur pour revenir dans son état initial est appelé temps de cycle (Tc). Par principe, chaque adsorbeur suit le même cycle avec un décalage temporel qu'on appelle temps de phase (Tp) ou plus simplement phase. Un procédé PSA met donc en jeu N volumes d'adsorbant suivant le même cycle et décalés dans le temps de Tp = Tc/N.,

Il existe un grand nombre de cycles possibles pour les unités VSA O2 qu'il n'est pas utile d'énumérer ici.

Les cycles industriels les plus courants comportent de 1 à 4 adsorbeurs, c'est-à-dire de 1 à 4 volumes unitaires d'adsorbant.

Contrairement a beaucoup de procédés, dans le cas de la production d'oxygène, la matière première, c'est-à-dire l'air atmosphérique, est gratuite et la consommation énergétique de l'unité est un des postes importants voire prépondérant dans le coût de production de l'oxygène, en particulier dans le cas d'une production élevée, par exemple supérieure à 120 tonnes/jour, où du fait de l'effet de taille, le poids de l'investissement ramené au Nm3 d'oxygène produit est moindre.

De ce fait, le moindre gain sur l'énergie spécifique est intéressant car il impacte directement et sensiblement les coûts de production.

Une des tendances de fond est donc d'utiliser des adsorbants de plus en plus spécifiques à la séparation N2/O2, c'est à dire présentant la meilleure combinaison sélectivité N2/O2, capacité N2, cinétique...et à gérer éventuellement les effets thermiques pour se rapprocher d'un fonctionnement isotherme optimal.

Ces adsorbants spécifiques ayant un coût élevé par rapport aux adsorbants plus basiques (comme une zéolite de type calcium A par exemple), une autre tendance pour limiter l'investissement et par là le coût global de production de l'oxygène est naturellement d'en diminuer la quantité nécessaire en utilisant en particulier des cycles de plus en plus courts. Cette évolution a commencé il y a plusieurs années et un des problèmes majeurs a été assez rapidement identifié : moins on utilise d'adsorbant, plus le risque de pollution est important à quoi s'ajoute le fait que les zéolites les plus spécifiques que l'on vient de mentionner sont en contre partie de plus en plus sensibles à cette pollution. Il convient effectivement de noter que le volume adsorbant a diminué beaucoup plus que la quantité d'air introduite par heure, pour une production O2 donnée. Le rendement d'extraction en oxygène -autour de 50 / 60%- a relativement peu évolué en comparaison de la réduction du volume d'adsorbant.

Il est donc courant sur les unités VSA O2 industrielles de changer l'adsorbant au bout de 4 ou 5 années de service pour récupérer les performances initiales. La zéolite est généralement expédiée chez le fournisseur qui la réactive, la reconditionne et la remet à disposition de l'industriel. Cette charge servira généralement à remplir ultérieurement une autre unité neuve ou une unité en cours de dépollution.

Il suffit d'avoir une charge suffisante de zéolite disponible d'avance pour effectuer le remplacement dans des délais relativement court, de l'ordre de la semaine par exemple.

Néanmoins une telle procédure est d'un coût relativement élevé et présente des risques. A côté du coût d'immobilisation d'une charge d'adsorbant, il faut rajouter la vidange, le stockage, les transports, la réactivation, le remplissage. Au cours des manipulations sur site et à l'usine, de 5 à 10% du produit est perdu et doit être remplacé par de l'adsorbant neuf. L'essentiel des risques correspond au remplissage durant lequel on doit évidemment éviter toute entrée d'humidité. Pour cela, il convient de mettre en oeuvre des moyens efficaces pour éviter tout contact prolongé entre l'adsorbant et l'air atmosphérique humide. De mauvaises conditions météorologiques sont susceptibles de retarder ces opérations de remplissage et d'entraîner des surcoûts.

On comprend alors tout l'intérêt qu'il y a à trouver une autre façon de maintenir au cours du temps le niveau initial -et maximal- de performances d'une unité VSA O2 sans avoir à effectuer le changement périodique de grosse quantité d'adsorbant ou sans avoir à avoir à installer des systèmes de régénération coûteux associé à des dimensionnements sophistiqués de gros adsorbeurs capables de supporter des contraintes thermiques élevées.

On connaît du document EP 1 095 689 un procédé de séparation par adsorption modulée en température dans lequel des adsorbeurs suivent le même cycle de pression avec un décalage d'une phase.

Partant de là, un problème qui se pose est de fournir un procédé VSA O2 amélioré.

Une solution de la présente invention est un procédé selon la revendication 1.

Selon le cas, le procédé selon l'invention peut présenter une ou plusieurs des caractéristiques suivantes :
- à l'étape a) au maximum un tiers des adsorbeurs d'un groupe est isolé ;
- à l'étape b) l'adsorbant est régénéré par circulation d'un gaz de régénération, à contre-courant du sens de circulation d'air, à une température supérieure à 100°C, préférentiellement à une température supérieure à 250°C ;
- ledit gaz de régénération est de l'air, de l'oxygène, de l'azote ou un mélange de ces gaz avec un point de rosée à pression atmosphérique inférieure à -30°C, préférentiellement inférieur à - 50°C, encore préférentiellement inférieur à -70°C ;
- le gaz de régénération est chauffé à une température supérieure à 100°C au moyen d'un réchauffeur électrique ;
- ledit procédé met en oeuvre un adsorbeur supplémentaire et à l'étape a) l'adsorbeur supplémentaire est intégré dans le groupe d'adsorbeurs de manière à suivre le cycle de pression à la place de l'adsorbeur isolé ;
- à l'étape a) un seul adsorbeur est isolé et les étapes a), b) et c) ont une durée totale comprise entre 8h et 48h. Pour un VSA comprenant 4 à 10 adsorbeurs la réalisation des étapes a), b) et c) pour chacun des adsorbeurs prendrait au total entre 2 jours et 2 semaines ;
- les adsorbeurs mis en oeuvre sont constitués d'une virole comprenant au moins un adsorbant particulaire ou au moins un contacteur à passages parallèles, avec ladite virole présentant un diamètre compris entre 0,5 et 2,5 m, de préférence compris entre 0,8 et 2 m, encore plus préférentiellement compris entre 1,0 et 1,5 m ;
- la pression haute de cycle est comprise entre 1 × 105 Pa et 1,55 × 105 Pa, de préférence entre 1,2 × 105 Pa et 1,35 × 105 Pa ;
- ledit procédé permet de produire entre 5 t/j à 240 t/j d'oxygène.

La régénération périodique ou exceptionnelle est faite localement, c'est-à-dire sur place, à proximité immédiate de l'unité VSA O2, ou sur le site industriel auquel est rattachée l'unité de production d'oxygène, voire dans un atelier à proximité du site, sans que l'adsorbant contenu dans l'adsorbeur ne soit retourné chez le fournisseur initial ou dans une usine extérieure spécialisée dans la réactivation d'adsorbant.

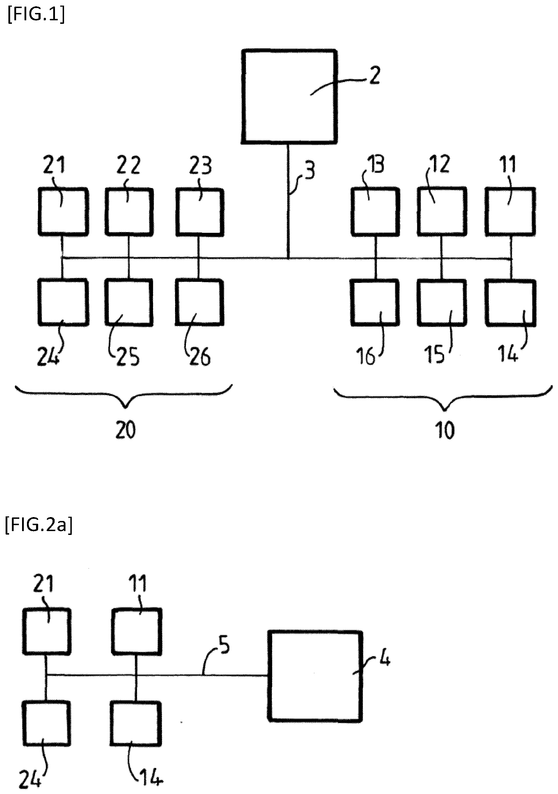

La figure 1 représente un exemple d'unité pouvant être mise en oeuvre dans le procédé selon l'invention. En effet, la figure 1 représente une unité comprenant 2 groupes 10 et 20 de 6 adsorbeurs, un ensemble de machines de compression et de pompage 2, un ensemble de tuyauteries et vannes 3 permettant d'effectuer le cycle de pression et de produire de l'oxygène à partir de l'air atmosphérique. Chacun des dits groupes ne constitue pas un adsorbeur unique comme c'est généralement le cas, mais consiste en 6 adsorbeurs 11 à 16 et 21 à 26 installés en parallèle. Les entrées et sorties des adsorbeurs sont reliées aux lignes principales permettant l'alimentation et l'extraction des différents flux mis en oeuvre dans le cycle. Les connections des différents adsorbeurs aux lignes principales sont démontables (vannes, brides...) et/ ou isolables.

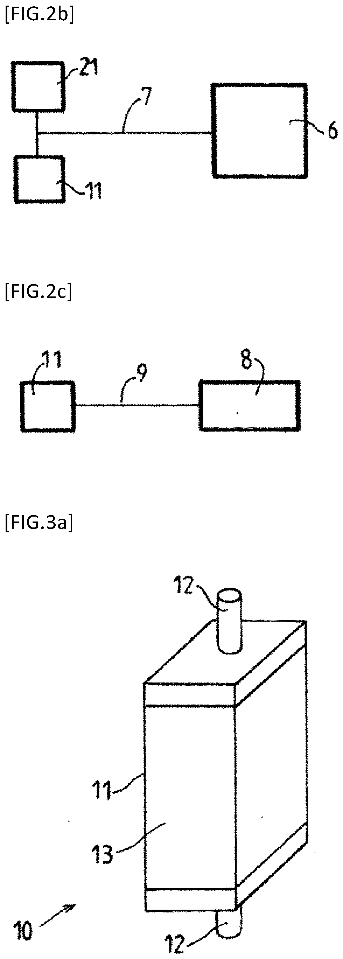

La figure 2 représente 3 cas de régénération périodique ou exceptionnelle selon l'invention pouvant avoir lieu au sein de l'unité représentée figure 1.

Le cas 2a représente le cas maximum où un tiers des adsorbeurs de chaque groupe est régénéré par élévation de température. En effet les adsorbeurs 11, 14 d'une part et 21,24 d'autre part sont déconnectés de l'unité et régénérés par circulation d'un flux gazeux chaud provenant d'un échangeur électrique 4 et distribué par des moyens de connexion 5. Le reste de l'unité qui ne subit pas la régénération exceptionnelle n'est pas représentée.

Le cas 2b représente le cas où on ne déconnecte que 2 adsorbeurs 11 et 21 pour subir la régénération exceptionnelle par circulation d'un flux chaud provenant d'un échangeur électrique 6. Si on compare le cas 2b au cas 2a étant donné que deux fois moins d'adsorbeurs sont régénérés l'échangeur 6 sera deux fois moins puissant que l'échangeur 4 ou s'il est aussi puissant la régénération sera plus rapide. Dans ce cas aussi, le reste de l'unité qui ne subit pas la régénération exceptionnelle n'est pas représentée.

Le cas 2c correspond à une autre variante. On ne régénère à la fois qu'un seul adsorbeur 11 avec un réchauffeur électrique 8 de puissance minimale. On dispose alors de 2 options principales quant à l'unité de production d'oxygène. Dans le premier cas, on isole et/ou déconnecte également un second adsorbeur faisant partie de l'autre groupe d'adsorbeurs et on continue d'opérer le VSA O2 avec deux groupes d'adsorbeurs représentant chacun les 5/6 du volume initial. Dans le second cas, on remplace l'adsorbeur 11 par un adsorbeur supplémentaire constituant un adsorbeur de rechange. On maintient alors la production nominale. Dans notre exemple, cela revient à avoir disponible un 13ème adsorbeur prêt à être utilisé. Le surcoût par rapport à l'unité initiale n'est alors que de quelques pourcents. Le choix entre maintenir la production ou accepter une baisse momentanée des performances se fait sur des critères économiques propres au site. Dans ce dernier cas, l'unité de production d'oxygène serait semblable à celle de la Figure 1, l'adsorbeur 11 étant alors remplacé par un adsorbeur supplémentaire.

Les adsorbeurs que l'on régénère peuvent comprendre soit le lit de garde destiné à arrêter l'humidité de l'air et au moins partiellement le dioxyde de carbone, et la zéolite destinée à la séparation N2/O2, soit éventuellement seulement la zéolite. Dans tous les cas selon l'invention, on ne régénérera à la fois au maximum qu'un tiers des adsorbeurs, c'est-à-dire au maximum un tiers de la totalité de l'adsorbant ou de la zéolite.

La régénération exceptionnelle des adsorbeurs par élévation de température s'effectue par circulation de gaz chaud à contre courant du sens d'introduction de l'air en marche normale. La température minimale à l'entrée du sous volume sera de 100°C mais on utilisera généralement des températures sensiblement plus élevée de l'ordre de 250, voire de 350°C et plus dès lors que l'on veut désorber de l'humidité. On pourra procéder par pallier si nécessaire pour éviter un vieillissement hydrothermal des adsorbants. Une partie de l'humidité sera désorbée à température modérée, par exemple 150°C, alors que les dernières traces d'eau, en particulier celles se trouvant dans la zéolite seront éliminées par exemple à 380°C.

Le gaz de régénération utilisé sera un gaz essentiellement sec, de l'air, de l'oxygène, de l'azote ou un mélange de ces gaz avec un point de rosée à pression atmosphérique inférieur à -30°C, préférentiellement inférieur à -50°C, encore préférentiellement inférieur à -70°C. On utilisera si possible un gaz décarbonaté, par exemple issu d'une unité de séparation cryogénique des gaz de l'air.

Compte tenu des niveaux de température, utilisés et de leurs variations éventuelles au cours de la procédure de régénération, le gaz de régénération sera préférentiellement chauffé au moyen d'un réchauffeur électrique. En effet, à même puissance installée, il sera possible de réchauffer un débit relativement important à une température intermédiaire et un débit plus faible à haute température.

Afin de limiter les déperditions thermiques, et de protéger le personnel opérant, il est prévu que les adsorbeurs soient isolables thermiquement, cette isolation, par exemple sous forme de deux demi coquilles, étant au moins mise en place lors de la décontamination.

L'intérêt de l'invention est que cette dépollution fractionnée soit faite localement, à proximité de l'unité VSA O2. Le réchauffeur pourra être ainsi situé sur l'emplacement même de l'unité VSA O2 ou plus loin sur le site s'il y a un avantage comme la proximité d'un réseau de gaz sec, d'une alimentation électrique adéquate, un abri... Dans la majorité des cas, on aura à déconnecter l'adsorbeur que l'on veut dépolluer et à le transporter jusqu'au réchauffeur. On peut également avoir seulement à déconnecter l'adsorbeur de l'unité VSA O2 et à le régénérer sur place, éventuellement en utilisant un réseau gaz chaud prévu à cet effet et pouvant alimenter chacun des adsorbeurs au moyen de canalisations fixes ou mobiles.

On pourra utiliser le gaz sec et décarbonaté pour hâter le refroidissement de l'adsorbeur après sa dépollution.

Vu sa faible puissance, le réchauffeur électrique pourra être transportable d'un site à un autre. Il sera alors intéressant de prévoir un programme d'entretien systématique des différentes unités au lieu d'attendre par exemple une baisse de performances sur un site pour lancer les opérations de dépollution.

On aura donc intérêt à utiliser des adsorbeurs identiques dans les diverses unités VSA O2. En fonction de la capacité recherchée, on adaptera le nombre d'adsorbeurs pour former le volume total nécessaire d'adsorbant. De la sorte, on pourra non seulement utiliser un unique réchauffeur de régénération mais également un seul adsorbeur supplémentaire qui suffira à maintenir en service toutes les unités VSA O2 pendant leur régénération exceptionnelle.

On a vu que les adsorbeurs devaient être
- soit isolables de l'unité VSA O2 et directement connectables au réchauffeur
- soit isolables de l'unité VSA O2 et amovibles pour être dépollués à proximité.

Dans ce dernier cas, il existe deux possibilités : l'adsorbeur possède sa propre enveloppe qui résiste à la pression et au vide avec les moyens de connexion appropriés, ou bien au contraire l'adsorbeur est un élément amovible contenu dans une enceinte commune qui en loge une pluralité. Il peut alors être nécessaire, après l'avoir retiré de son logement, de la placer dans une enceinte spéciale afin de le régénérer.

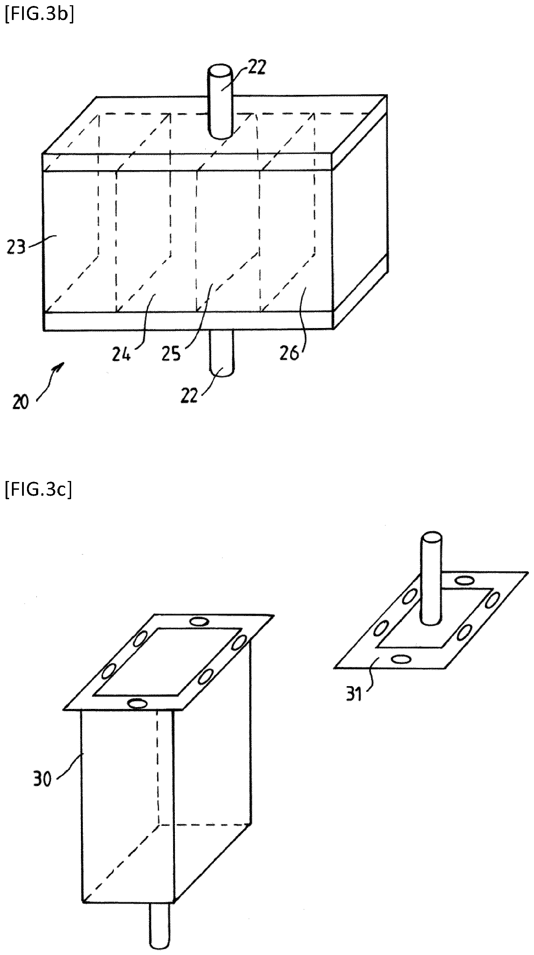

La Figure 3 illustre ces derniers points. La figure 3a représente un adsorbeur 10 comportant une enveloppe extérieure 11 dans laquelle est logé le volume d'adsorbant 13. Les tubulures entrée/sortie référencées 12 permettent de relier cet adsorbeur à ces adsorbeurs frères pour constituer l'équivalent d'un plus gros adsorbeur correspondant à un adsorbeur classiquement utilisé dans l'état de l'art. Ce module est autonome et peut être directement régénéré après connexion au système de régénération. Au contraire la figure 3b représente un groupe d'adsorbeurs 20 constitué de 4 adsorbeurs 23, 24, 25, 26 placés dans une même enceinte 21. La décontamination du module 23 par exemple nécessitera à priori de disposer d'une enveloppe adéquate dans laquelle il conviendra de le placer avant de le connecter au système de régénération. La Figure 3c représente une enveloppe de ce type (30). L'adsorbeur étant mis en place à l'intérieur, l'enveloppe est fermée au moyen d'un couvercle supérieur (31) maintenu en place par un système de brides. L'intérêt d'un tel système est que l'enveloppe du groupe d'adsorbeurs -21 dans la Figure 3.b - et les pièces internes (distributeur, support...) n'ont pas à être calculées pour tenir à la haute température de régénération.

D'un point de vue économique on dimensionnera ces unités VSA O2 avec 4 à 10 adsorbeurs fonctionnant en parallèle par groupe, le nombre de groupes quant à lui dépendant du cycle de pression retenu.

L'invention va à présent être décrite en détail pour une unité VSA O2 produisant un débit d'environ 120 tonnes par jour d'oxygène compté pur à une pureté de 90% molaire. La production doit être disponible de manière continue et constante à une pression de 1.35 bar abs. Le site est proche du niveau de la mer et les conditions locales correspondent à une zone tempérée et d'humidité normale. Il s'agit donc de conditions classiques pour une telle unité. Le cycle retenu est un cycle avec une pression haute de 1.50 bar abs et une pression basse voisine de 0.35 bar abs, comportant 4 temps de phase et donc 4 groupes d'adsorbeurs, chacun formés par un groupe d'adsorbeurs identiques.

On utilise des groupes de 5 adsorbeurs fonctionnant en parallèle, soit 20 adsorbeurs en tout, chaque module comportant un peu plus de 2m3 d'adsorbant

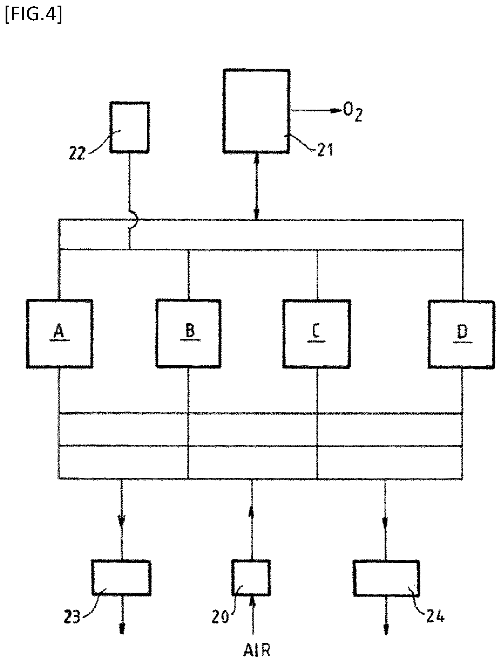

La description détaillée du cycle est donnée ci-dessous à titre indicatif, l'intérêt de l'invention n'étant évidemment pas limité à ce procédé, ni même à la mise en oeuvre de 4 groupes d'adsorbeurs (A, B, C, D). La Figure 4 illustre très schématiquement cette unité VSA O2.

| X | T1 (Prod) | T2 | T3 | X | X | X | T2 | T2 | T3 | T2 | T1 (Prod) |
|---|---|---|---|---|---|---|---|---|---|---|---|
| X | 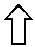 | 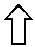 | 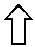 | X | X | X | 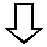 | 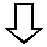 | 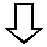 | 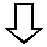 | 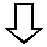 |
| 1 | 2 | 3 | 4 | 5 | 6 | 7 | 8 | 9 | 10 | 11 | 12 |
| 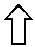 | 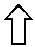 | X | 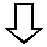 | 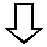 | 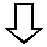 | 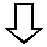 | 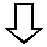 | 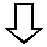 | X | 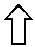 | 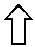 |
| C-air | C-air | X | PAV1 | PAV1 | PAV1 | PAV2 | PAV2 | PAV2 | X | ATM | C-air |

Première phase: un groupe de 5 adsorbeurs, correspondant par exemple au groupe A, est repressurisé au moyen d'air comprimé 1 ; lorsque le niveau de pression recherché est atteint, l'oxygène T1 est envoyé vers une capacité référencée 21; le groupe d'adsorbeurs, alors isolé côté alimentation, est dépressurisé côté production fournissant un gaz riche en oxygène T2 également envoyé vers une capacité référencée 22.

Deuxième de phase : il correspond au pompage sous vide au moyen de la première pompe à vide PAV 1 référencée 23. Dans un premier temps, on récupère simultanément par décompression à co-courant un troisième flux riche en oxygène T3 (4). Les deux étapes suivantes correspondent au simple pompage sous vide (5 et 6).

Troisième phase: il correspond à la mise en oeuvre de la deuxième pompe à vide PAV2 référencée 24 avec continuation du pompage (7) puis élution avec une partie du flux T2 (8 et 9). Quatrième phase : il correspond à la repressurisation du 4ème groupe d'adsorbeurs, d'abord par le flux T3 (10), puis simultanément par le flux T2 et l'air atmosphérique (11) et enfin par un flux extrait de la production T1 et par de l'air issu du compresseur référencé 20 (12).

Il s'agit d'un cycle particulièrement performant où chacun des adsorbeurs fonctionne en continu. L'énergie spécifique dépend essentiellement du choix de ces adsorbeurs et plus particulièrement de l'optimisation entre performances, investissement et simplicité. Avec les adsorbants les plus efficaces et des machines performantes, elle peut être de l'ordre de 0.3 KWh/Nm3 et conduire à un coût très compétitif pour l'oxygène.

Comme il a été déjà écrit, l'unité comporte quatre groupes de 5 adsorbeurs identiques chacun. L'adsorbeur se présente sous la forme d'une enveloppe cylindrique à axe vertical renfermant 2 couches d'adsorbants, c'est-à-dire de bas en haut environ 0.20 m d'alumine activée et 0.80m de LILSX, zéolite qui a été de préférence déposé sur un noyau inerte.

Comme on l'a déjà dit, il est probable qu'au cours du fonctionnement, une petite fraction du CO2, des oxydes d'azote et des traces d'hydrocarbures, ces derniers composants pouvant être moins adsorbables que le CO2, vont migrer dans la zéolite au fil des cycles affectant ses performances vis-à-vis de l'arrêt de l'azote de quelques pourcents. Cela se traduit généralement par une augmentation de l'énergie spécifique, la production restant quant à elle généralement suffisante pour la demande, l'unité ayant été dimensionnée généralement avec une certaine marge. De plus, ce léger manque de capacité d'adsorption d'azote peut être également compensé par exemple par une pression basse plus faible de quelques millibars. Si aucune mesure n'est prise, le surcoût énergétique va finir par devenir sensible or il compte majoritairement dans le coût de l'oxygène dès lors que la production O2 est importante (à partir de 120 t/j par exemple).

De même, malgré les précautions prises, de petites entrées d'eau au niveau de la zéolite ne peuvent être exclues que ce soit une migration en provenance du lit de garde ou des aspirations d'air atmosphérique au niveau des diverses jonctions lorsque l'adsorbant est sous vide.

Il a donc été prévu afin de maintenir le coût de production de l'oxygène à un niveau très bas, de pouvoir régénérer l'ensemble de l'adsorbant tous les 24 mois environ sans devoir augmenter le temps d'arrêt nécessaire à l'entretien habituel ( vannes, machines...) et sans avoir bien sûr à remplacer les charges initiales dudit adsorbant.

A cette fin, la présence périodique d'une unité de régénération mobile comprenant un générateur d'air sec, décarbonaté et exempt de la plupart des impuretés atmosphériques (NOx, hydrocarbures insaturés ou de type C3+, VOC, traces potentielles de contaminants divers tels NH3, H2S, alcools...) et un réchauffeur électrique avec les systèmes de contrôle-commande et de sécurité adéquats est programmée longtemps à l'avance dans le processus de maintenance et entretien de l'unité.

Lorsque la période de la décontamination est venue, on applique une procédure destinée à minimiser les perturbations si on ne veut pas interrompre la production d'oxygène. Cela consiste à passer en marche dégradée, adaptée à un fonctionnement avec 80% du volume d'adsorbant. Cela se traduit éventuellement par le raccourcissement de certaines sous étapes afin de rester dans des zones opératoires ne présentant aucun problème particulier. Moyennant une augmentation de l'énergie spécifique, on pourra produire plus de 90% du débit nominal.

Simultanément, on isole 4 adsorbeurs, un sur chaque groupe d'adsorbeurs. Chacun de ces modules est tour à tour retiré de l'unité VSA O2, connecté au système de régénération et décontaminé. La procédure de décontamination est totalement automatique, surveillée en permanence par le système de contrôle-commande du réchauffeur de régénération. Une première phase à une température de l'ordre de 150°C permet d'évacuer la majorité des impuretés secondaires et l'essentiel de l'eau. Le suivi de la température en sortie de l'adsorbeur, caractéristique de la teneur résiduelle en eau du lit de garde, permet par exemple de passer à l'étape suivante qui consiste à augmenter la température progressivement jusqu'à 350°C, en particulier en baissant le débit de gaz de régénération. La durée de cette phase peut être préprogrammée, la quantité d'eau résiduelle à enlever étant très faible et n'intervenant pratiquement pas dans le bilan thermique. On peut ainsi se limiter à porter à haute température la zéolite en laissant la majorité du lit de garde à 150°C ainsi que la partie basse du module, limitant ainsi les contraintes thermiques sur le système de supportage. Une séquence de refroidissement se déroule ensuite à contre-courant du chauffage avec l'air épuré à température ambiante jusqu'à refroidir la totalité du volume de zéolite. La fin du refroidissement peut s'effectuer à l'air atmosphérique afin de recharger partiellement en eau l'entrée du lit de garde et avoir un adsorbeur plus proche de ce point de vue des adsorbeurs restés en fonctionnement. On évite ainsi de mettre en oeuvre dans le cycle un adsorbeur présentant un comportement thermique différent de ceux restés en service, comportement lié à une trop forte adsorption de l'humidité lors des premiers cycles suivant la remise en service. Lorsque les 4 adsorbeurs décontaminés sont replacés dans l'unité et remis en service, il est possible de traiter les 4 suivant et ainsi de suite. La décontamination, les démontages et remontages de 4 adsorbeurs prenant environ 48 h, l'unité VSA O2 est totalement décontaminée en deux semaines. Compte tenu des temps de transport d'un site à un autre, le système de régénération peut traiter une dizaine d'unités par an.

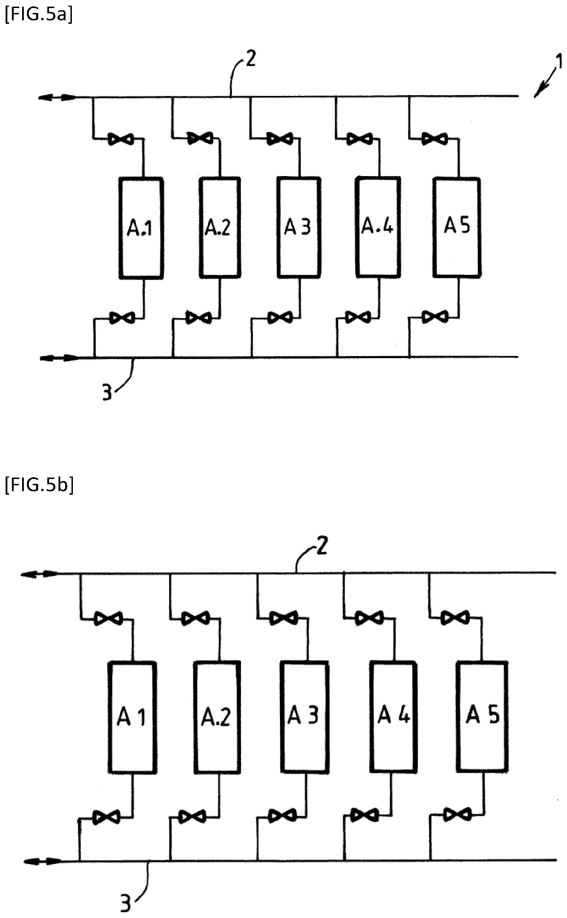

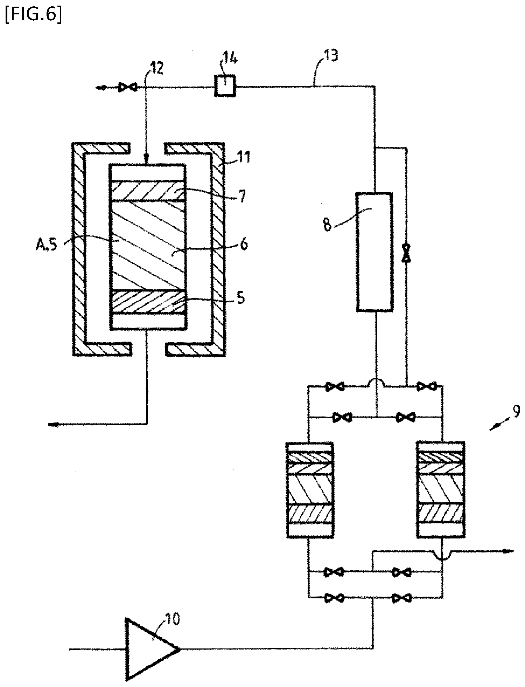

Les Figures 5 et 6 illustrent la procédure décrite ci-dessus.

Les 5 adsorbeurs formant un groupe d'adsorbeurs 1, par exemple le groupe A sont en pratique disposés en étoile de façon symétrique mais pour faciliter la compréhension, ils sont alignés sur la Figure 5.a qui correspond au fonctionnement nominal: les 5 adsorbeurs (A.1 à A.5) fonctionnent en parallèle comme le ferait un adsorbeur unique. Ils sont connectés au collecteur air / azote 3 et au collecteur oxygène 2. Le dispositif repéré 4 représente un système de connexion étanche au vide vis-à-vis de l'atmosphère, démontable et obturable. Il s'agit ici d'une vanne TOR à brides. Le reste de l'unité VSA O2 n'est pas représenté sur le schéma. Sur la Figure 5.b, l'adsorbeur A.5 a été déconnecté des collecteurs de l'unité alors que les adsorbeurs A.1 à A.4 restent connectés quant à eux aux dits collecteurs et continuent de suivre le cycle de pression. Sur la Figure 6, l'adsorbeur A.5 a été connecté au réchauffeur électrique 8 lui-même alimenté en gaz sec, décarbonaté et exempt d'impuretés secondaires polluantes pour la zéolite de l'unité VSA O2. Ce gaz est fourni par une unité d'épuration de type TSA 9 dimensionnée à cette fin. Cette petite unité comprendra préférentiellement de l'alumine activée, de la zeolite 13 X et une ou plusieurs couches de zéolite échangée (au calcium, baryum...).

Le TSA est lui-même alimenté en air par le compresseur 10 à une pression de l'ordre de 3.5 bar abs. Filtre à l'aspiration, réfrigérant final, etc....ne sont pas représentés. Le repère 11 correspond au système d'isolation thermique du module en cours de décontamination. Il s'agit de 2 coquilles isolantes amovibles facilement fixables au module. Le repère 14 représente le système de connexion entre la tubulure de l'adsorbeur 12 et la tubulure 13 du réchauffeur électrique. Cela peut être une simple fixation par des brides... Tuyauteries, réchauffeur électrique, unité TSA sont également isolés thermiquement.

On a décidé ici que l'on effectuait la décontamination adsorbeur par adsorbeur. On déconnecte par exemple simultanément les adsorbeurs A5, B5, C5, D5 que l'on décontamine successivement un par un, puis que l'on remet en service. On procède de la sorte avec les quatre adsorbeurs repérés 1 (A1, B1, C1, D1), puis repérés 2 (A2, B2,...), 3 et 4. L'unité VSA O2 continue de produire avec 4 adsorbeurs sur 5 en service. En acceptant une énergie spécifique dégradée, on pourra produire plus de 110t/j d'oxygène mais il sera bien sûr préférable d'effectuer les décontaminations, comme on l'a déjà écrit, pendant des périodes où la demande en oxygène est moindre. Elles pourraient bien sûr s'effectuer en période d'arrêt, par exemple pour maintenance des adsorbeurs, des compresseurs d'aide ou de la pompe à vide.

Il est évidement possible de procéder différemment en décontaminant plusieurs adsorbeurs à la fois. Si l'on veut continuer de produire de l'oxygène, il convient néanmoins de fonctionner avec le même volume d'adsorbant par phase, c'est-à-dire en pratique avec le même nombre d'adsorbeurs par groupe (ici 4 de préférence). On peut également avoir un module supplémentaire de remplacement comme décrit plus haut puis utiliser l'adsorbeur décontaminé comme adsorbeur supplémentaire de remplacement et ainsi de suite.

L'invention se limite aux VSA O2 car il s'agit d'un type d'unité très répandu présentant des risques de pollution avérés par l'expérience, pollution affectant sensiblement les performances, et mettant en oeuvre des adsorbants coûteux et difficiles à régénérer. Mais une telle approche pourrait également concerner bien entendu d'autres applications, en particulier celles utilisant le vide au cours du cycle comme certains VSA CO2 ou VSA CO ou des unités de séparation N2/ CH4. Le point principal consiste à pouvoir régénérer localement une petite fraction du volume total d'adsorbant de la dite unité et de répéter cette opération, si nécessaire, afin de régénérer en plusieurs fois la totalité de cet adsorbant.

## Revendications

1. Procédé de production d'oxygène de type VSA à partir d'un flux d'air, mettant en oeuvre au moins un groupe d'au moins 3 adsorbeurs installés en parallèle et suivant le même cycle VSA où se succèdent une phase d'adsorption à la pression haute du cycle, une phase de désorption à des pressions inférieures à la pression haute du cycle, une phase de repressurisation de l'adsorbeur jusqu'à la pression haute du cycle, **caractérisé en ce que** périodiquement ou exceptionnellement :
a) au moins un adsorbeur du groupe d'adsorbeurs est isolé de manière à ne plus suivre le cycle de pression,
b) l'adsorbant contenu dans l'adsorbeur isolé à l'étape a) est régénéré par élévation de la température, et
c) l'adsorbeur régénéré à l'étape b) est réintégré dans le groupe d'adsorbeurs de manière à suivre à nouveau le cycle de pression,
avec :
- ledit procédé mettant en oeuvre des moyens de connexion amovibles à des circuits de flux d'air, de flux d'oxygène et de flux résiduaire et des adsorbeurs amovibles et
- à l'étape a) l'adsorbeur est isolé par déplacement dudit adsorbeur hors de l'unité formée par le groupe d'au moins 3 adsorbeurs,
le procédé mettant en oeuvre au moins 2 groupes d'au moins 3 adsorbeurs avec les groupes suivant chacun en décalage le même cycle VSA.

2. Procédé selon la revendication précédente, **caractérisé en ce qu'**à l'étape a) au maximum un tiers des adsorbeurs d'un groupe est isolé.

3. Procédé selon l'une des revendications 1 à 2, **caractérisé en ce qu'**à l'étape b) l'adsorbant est régénéré par circulation d'un gaz de régénération, à contre-courant du sens de circulation d'air, à une température supérieure à 100°C, préférentiellement à une température supérieure à 250°C.

4. Procédé selon la revendication précédente, **caractérisé en ce que** ledit gaz de régénération est de l'air, de l'oxygène, de l'azote ou un mélange de ces gaz avec un point de rosée à pression atmosphérique inférieure à -30°C, préférentiellement inférieur à -50°C, encore préférentiellement inférieur à -70°C.

5. Procédé selon l'une des revendications 3 à 4, **caractérisé en ce que** le gaz de régénération est chauffé à une température supérieure à 100°C au moyen d'un réchauffeur électrique.

6. Procédé selon l'une des revendications 1 à 5, **caractérisé en ce que** ledit procédé met en oeuvre un adsorbeur supplémentaire et à l'étape a) l'adsorbeur supplémentaire est intégré dans le groupe d'adsorbeurs de manière à suivre le cycle de pression à la place de l'adsorbeur isolé.

7. Procédé selon l'une des revendications 1 à 5, **caractérisé en ce qu'**à l'étape a) un seul adsorbeur est isolé et les étapes a), b) et c) ont une durée totale comprise entre 8h et 48h.

8. Procédé selon l'une des revendications 1 à 7, **caractérisé en ce que** les adsorbeurs mis en oeuvre sont constitués d'une virole comprenant au moins un adsorbant particulaire ou au moins un contacteur à passages parallèles, avec ladite virole présentant un diamètre compris entre 0,5 et 2,5 m, de préférence compris entre 0,8 et 2 m, encore plus préférentiellement compris entre 1,0 et 1,5 m.

9. Procédé selon l'une des revendications 1 à 8, **caractérisé en ce que** la pression haute de cycle est comprise entre 1 × 10⁵ Pa et 1,55 × 10⁵ Pa, de préférence entre 1,2 × 10⁵ Pa et 1,35 × 10⁵ Pa.

10. Procédé selon l'une des revendications 1 à 9, **caractérisé en ce que** ledit procédé permet de produire entre 5 t/j à 240 t/j d'oxygène.

## Patentansprüche

1. Verfahren zur Erzeugung von Sauerstoff vom Typ VSA aus einem Luftstrom, das mindestens eine Gruppe aus mindestens 3 Adsorbern einsetzt, die parallel aufgestellt sind und dem gleichen VSA-Zyklus folgen, bei dem eine Adsporptionsphase bei dem hohen Druck des Zyklus, eine Desorptionsphase bei geringeren Drücken als dem hohen Druck des Zyklus, eine Druckwiederaufbauphase des Adsorbers bis auf den hohen Druck des Zyklus aufeinander folgen, **dadurch gekennzeichnet, dass** periodisch oder ausnahmsweise:
a) mindestens ein Adsorber der Absorbergruppe isoliert wird, so dass er dem Druckzyklus nicht mehr folgt,
b) das in dem im Schritt a) isolierten Adsorber enthaltene Adsorbens durch Erhöhung der Temperatur regeneriert wird und
c) der im Schritt b) regenerierte Adsorber wieder in die Adsorbergruppe integriert wird, so dass er dem Druckzyklus erneut folgt,
wobei:
- das Verfahren lösbare Mittel zum Anschließen an Luftstrom-, Sauerstoffstrom-, und Reststromkreise und lösbare Adsorber einsetzt und
- der Adsorber im Schritt a) durch Bewegen des Adsorbers aus der durch die Gruppe aus mindestens 3 Adsorbern gebildeten Einheit heraus isoliert wird,
wobei das Verfahren mindestens 2 Gruppen aus mindestens 3 Adsorbern einsetzt, wobei die Gruppen jeweils dem gleichen VSA-Zyklus versetzt folgen.

2. Verfahren nach dem vorhergehenden Anspruch, **dadurch gekennzeichnet, dass** im Schritt a) höchstens ein Drittel der Adsorber einer Gruppe isoliert wird.

3. Verfahren nach einem der Ansprüche 1 bis 2, **dadurch gekennzeichnet, dass** das Adsorbens im Schritt b) durch Zirkulation eines Regenerationsgases im Gegenstrom zur Luftzirkulationsrichtung bei einer Temperatur über 100 °C, bevorzugt bei einer Temperatur über 250 °C regeneriert wird.

4. Verfahren nach dem vorhergehenden Anspruch, **dadurch gekennzeichnet, dass** das Regenerationsgas Luft, Sauerstoff, Stickstoff oder ein Gemisch dieser Gase mit einem Taupunkt bei atmosphärischem Druck unter -30 °C, bevorzugt unter -50 °C, noch bevorzugter unter -70 °C ist.

5. Verfahren nach einem der Ansprüche 3 bis 4, **dadurch gekennzeichnet, dass** das Regenerationsgas mittels eines elektrischen Erhitzers auf eine Temperatur über 100 °C erhitzt wird.

6. Verfahren nach einem der Ansprüche 1 bis 5, **dadurch gekennzeichnet, dass** das Verfahren einen zusätzlichen Adsorber einsetzt und der zusätzliche Adsorber im Schritt a) in die Adsorbergruppe integriert wird, so dass er anstelle des isolierten Adsorbers dem Druckzyklus folgt.

7. Verfahren nach einem der Ansprüche 1 bis 5, **dadurch gekennzeichnet, dass** im Schritt a) ein einziger Adsorber isoliert wird und die Schritte a), b) und c) eine Gesamtdauer zwischen 8 h und 48 h haben.

8. Verfahren nach einem der Ansprüche 1 bis 7, **dadurch gekennzeichnet, dass** die eingesetzten Adsorber aus einem Mantel bestehen, der mindestens ein partikuläres Adsorbens oder mindestens einen Kontaktor mit parallelen Durchlässen umfasst, wobei der Mantel einen Durchmesser zwischen 0,5 und 2,5 m, bevorzugt zwischen 0,8 und 2 m, noch bevorzugter zwischen 1,0 und 1,5 m aufweist.

9. Verfahren nach einem der Ansprüche 1 bis 8, **dadurch gekennzeichnet, dass** der hohe Zyklusdruck zwischen 1 × 10⁵ Pa und 1,55 × 10⁵ Pa, bevorzugt zwischen 1,2 × 10⁵ Pa und 1,35 × 10⁵ Pa beträgt.

10. Verfahren nach einem der Ansprüche 1 bis 9, **dadurch gekennzeichnet, dass** das Verfahren es ermöglicht, zwischen 5 t/Tag und 240 t/Tag Sauerstoff zu erzeugen.

## Claims

1. Oxygen production process of VSA type from a flow of air, using at least one group of at least 3 adsorbers installed in parallel and following the same VSA cycle comprising, in succession, a phase of adsorption at the high pressure of the cycle, a phase of desorption at pressures lower than the high pressure of the cycle, a phase of repressurization of the adsorber to the high pressure of the cycle, **characterized in that**, periodically or exceptionally:
a) at least one adsorber of the group of adsorbers is isolated so as to no longer follow the pressure cycle,
b) the adsorbent contained in the adsorber isolated in the step a) is regenerated by raising the temperature, and
c) c)the adsorber regenerated in the step b) is re-incorporated in the group of adsorbers so as to once again follow the pressure cycle,
with:
- said process using removable means of connection to air flow, oxygen flow and residual flow circuits and removable adsorbers and
- in the step a) the adsorber is isolated by displacement of said adsorber out of the unit formed by the group of at least 3 adsorbers,
the process using at least 2 groups of at least 3 adsorbers with the groups each following, in offset fashion, the same VSA cycle.

2. Process according to the preceding claim, **characterized in that** in the step a) at most a third of the adsorbers of a group is isolated.

3. Process according to either of Claims 1 and 2, **characterized in that** in the step b) the adsorbent is regenerated by circulation of a regeneration gas, counter-current to the direction of air circulation, at a temperature above 100°C, preferentially at a temperature above 250°C.

4. Process according to the preceding claim, **characterized in that** said regeneration gas is air, oxygen, nitrogen or a mixture of these gases with a dew point at atmospheric pressure below -30°C, preferentially below -50°C, more preferentially below -70°C.

5. Process according to either of Claims 3 and 4, **characterized in that** the regeneration gas is above 100°C by means of an electric heater.

6. Process according to one of Claims 1 to 5, **characterized in that** said process uses an additional adsorber and in the step a) the additional adsorber is incorporated in the group of adsorbers so as to follow the pressure cycle in place of the isolated adsorber.

7. Process according to one of Claims 1 to 5, **characterized in that** in the step a) a single adsorber is isolated and the steps a), b) and c) have a total duration of between 8 h and 48 h.

8. Process according to one of Claims 1 to 7, **characterized in that** the adsorbers used consist of a barrel comprising at least one particulate adsorbent or at least one parallel passage contactor, with said barrel having a diameter of between 0.5 and 2.5 m, preferably between 0.8 and 2 m, even more preferentially between 1.0 and 1.5 m.

9. Process according to one of Claims 1 to 8, **characterized in that** the high pressure of the cycle is between 1 × 10⁵ Pa and 1.55 × 10⁵ Pa, preferably between 1.2 × 10⁵ Pa and 1.35 × 10⁵ Pa.

10. Process according to one of Claims 1 to 9, **characterized in that** said process makes it possible to produce between from 5 t/d to 240 t/d of oxygen.
